# EUROPÄISCHE PATENTANMELDUNG

(11) **EP 0 866 042 A2**
(43) Veröffentlichungstag der Anmeldung: **23.09.1998**
(21) Anmeldenummer: 98104089.2
(22) Anmeldetag: 07.03.1998
(51) Int. Cl.: C05F 9/04, C05F 17/00, C12P 5/02

(54) **Verfahren zur Behandlung von Bioabfällen**

(30) Priorität: 19.03.1997 DE 19711355
(71) Anmelder: Lurgi Entsorgungstechnik GmbH, 60295 Frankfurt (DE)
(72) Erfinder: Vollmer, Friedel, Dipl.-Ing., 44652 Herne (DE); Dolle, Lothar, 44627 Herne (DE); Kirchgaesser, Peter, 50733 Köln (DE)
(74) Vertreter: Vomberg, Friedhelm, Dipl.-Phys.

(57) **Zusammenfassung**

Die Erfindung betrifft ein Verfahren zur Behandlung von Bioabfällen, die in jeweils getrennten Verfahrensstufen einer Hydrolyse und sauren Gärung einerseits und einer Methanisierung zugeführt werden. Erfindungsgemäß wird zwischen den genannten Verfahrensstufen eine Hygienisierung durchgeführt.

## Beschreibung

Die Erfindung betrifft ein Verfahren zur Behandlung von Bioabfällen, bestehend aus strukturarmen Bioabfällen, wie nativ organischen Bestandteilen des Hausmülls aus getrennten Sammlungen, Großküchenabfällen, Abfällen aus lebensmittelverarbeitenden Betrieben sowie vorgenannten Stoffen ähnlichen organischen Rückständen, bei dem die aufgegebenen Bioabfälle zerkleinert, gemischt und mit Wasser in Form einer Suspension nach Absiebung von Störstoffen einer Hydrolyse und danach einer Fermentation (Methanisierung) unterzogen werden, woraus ein verbleibender Gärschlamm entwässert und einer Kompostierung zugeführt wird.

Die vorliegende Erfindung beschränkt sich somit von vornherein auf bestimmte Bioabfälle pflanzlichen und tierischen Ursprunges sowie von Veredelungsprodukten, die für eine Vergärung geeignet oder prädestiniert sind. Dies sind Abfälle aus der Nahrungsmittelproduktion, wie Spelzen, Spelzen- und Getreidestaub, Würzmittelrückstände, Rückstände aus Konservenfabrikationen, Melasserückstände, Teigabfälle sowie sonstige schlammförmige Nahrungsmittelabfälle. Aus der Genußmittelproduktion sind verwertbar Malztreber, Malzkeime, Hopfentreber, Obst-, Getreide- und Kartoffelschlempen, Trub und Schlamm aus Brauereien, Schlamm aus der Weinbereitung oder Brennereien, Trester sowie Hefe und hefeähnliche Rückstände. Weiterhin gehören zu Bioabfällen Futtermittelrückstände, Ölsaatenrückstände, Inhalte von Fettabscheidern, Molken, Schlämmen aus der Speisefett- oder Speiseölfabrikation, entölte Bleicherde, Schlachtabfälle, wie Borsten- und Hornabfälle, Geflügel-, Fischabfälle, Blut, Magen- und Darminhalte, Wildabfälle. Bioabfälle sind ferner tierische Fäkalien, wie Geflügelkot, Schweine- und Rindergülle, Mist oder Gelatinespalt (als Abfall von Häuten und Fellen).

Es ist allgemein bekannt, daß organische Rückstände einer anaeroben Fermentation in Vergärungsunterlagen unterzogen werden können. Bei dem mehrstufigen Verfahren, von dem die vorliegende Erfindung ausgeht, wird zunächst der Bioabfall aufbereitet, d.h. eventuell enthaltene Störstoffe müssen entfernt, die abgegebenen Bioabfälle zerkleinert und mit Wasser zu einer geeigneten Suspension vermischt werden. Die Hydrolyse und saure Gärung wird bei Temperaturen zwischen 35°C bis 65°C und pH-Werten unter 7 durchgeführt. Die pH-Wert-Einstellung ist erforderlich, um Schwermetalle aus den organischen gelösten Komplexverbindungen zu befreien und in eine ionisierte wasserlösliche Form zu überführen, aus der z.B. durch Zugabe von Fällungsmitteln Schwefelsäure, Blei, Cadmium oder andere Metalle ausgefällt werden können. Hierdurch sollen den Mikroorganismen optimale Lebensbedingungen geschaffen werden. Die Temperatureinstellung, die bevorzugt zwischen 35°C bis 37°C oder zwischen 55°C bis 60°C liegt, dient dazu, die Löslichkeit der Bioabfälle in der Suspension sicherzustellen.

Der aus der Hydrolyse und sauren Gärung in die Methanisierung überführte Restschlamm wird konditioniert, d.h. auf einen optimalen Wasser-Anteil, pH-Wert um 7 und eine geeignete Temperatur eingestellt. Bei der Methanisierung unterscheidet man zwischen mesophilen und thermophilen Verfahren. Bei den mesophilen Verfahren dominieren Mikroorganismen, die ihr Reaktionsoptimum bei Betriebstemperaturen um 35°C erreichen, während bei thermophilen Verfahren Mikroorganismen mit einem Reaktionsoptimum bei Betriebstemperaturen um 55°C ausgenutzt werden. In der Methanisierungsstufe entstehen Gasgemische, die im wesentlichen CH₄, CO₂ und H₂ enthalten, die einem Gasspeicher zuführbar sind, von wo aus die brennbaren Anteile bedarfsgesteuert ist ein Blockheizkraftwerk zur Verbrennung gegeben werden.

Das vorbeschriebene, grundsätzlich nach dem Stand der Technik bekannte Verfahren hat die Zielsetzung, den Anteil der Stoffe, die (wie Schwermetalle) einer Deponierung zugeführt werden müssen, weitestmöglich zu minimieren, um aus der Methanisierungsstufe Gärschlämme zu erhalten, die nach entsprechender Kompostierung gefahrlos wieder verwertbar sind.

Voraussetzung hierfür ist jedoch, daß ein phyto-, human- und veterenärhygienisch einwandfreies Produkt (Humus) erzeugt werden kann, um eine Umweltgefährdung (für Mensch und Tier) durch Keime im Endprodukt zu verhindern.

Darüber hinaus ist auch die gesamte Verfahrensführung nur dann für den Menschen ungefährlich, wenn hier weitestgehend Keimverschleppungen in die Umwelt verhindert werden.

Es ist daher Aufgabe der vorliegenden Erfindung, das eingangs genannte Verfahren dahingehend zu verbessern, daß eine Umweltgefährdung durch Menschen und Tiere gefährdende Keime weitgehend ausgeschlossen ist.

Diese Aufgabe wird durch das Verfahren nach Anspruch 1 gelöst. Erfindungsgemäß wird nach der Hydrolyse und vor der Fermentation eine Hygienisierung durchgeführt. Das Verfahren hat damit den Vorteil, daß die Hygienisierung zeitlich sowie hinsichtlich des Energieaufwandes beschränkt werden kann, da die bereits zerkleinerten Bioabfälle nach ihrem durch die Hydrolyse und die saure Gärung erfolgten chemischen Aufschluß leicht zugänglich sind und somit eine Verschleppung von Krankheitserregern oder Keimen in nachfolgende Verfahrensstufen bzw. Anlagenteile verhindert werden kann. Die Hygienisierung läßt sich damit in dieser Verfahrensstufe besonders wirtschaftlich durchführen.

Bevorzugt wird eine Hygenisierung bei Temperaturen zwischen 70°C und 95°C über eine Dauer von mindestens 30 Minuten. Grundsätzlich ist auch eine Hygienisierung bei geringeren Temperaturen zulässig, jedoch muß die Behandlungsdauer dann entsprechend zur Keim- und Erregerabtötung verhindert werden.

Die Wirksamkeit der Hygienisierung wird weiterhin dadurch gefördert, daß die Suspension aus den zerkleinerten bzw. zersetzten Bioabfällen und Wasser während der Erwärmung auf die vorgenannte Temperatur ständig bewegt wird, insbesondere durch Rührwerke oder ähnliches.

Um das Vergärungsverfahren kostengünstig durchführen zu können, wird bevorzugt die Hygienisierung in einem oder mehreren geschlossenen Behältern durchgeführt, die mittels Wärmetauschern geheizt werden, welche die Heizenergie aus der Biogas-Verbrennung erhalten. Die Wirksamkeit der Hygienisierung hängt insbesondere auch ab von der Größe der Bioabfall-Partikel, die in der Suspension enthalten sind. Die Wirksamkeit der Hygienisierung wird optimiert, sofern die Bioabfälle vor der Hydrolyse auf eine Größe von maximal 1 cm Durchmesser, vorzugsweise ≤ 0,7 cm, zerkleinert werden. Zur Zerkleinerung bietet sich ein Mazerator an, d.h. eine Zerkleinerungsvorrichtung mit rotierenden Klingen, die sich gegen einen Gitterrost drehen.

Nach einer weiteren Ausgestaltung der Erfindung hat die aus Wasser und zerkleinerten Bioabfällen bestehende Suspension in der Hydrolyse- und Sauregärung-Stufe eine Verweilzeit von maximal einen Tag (24 Stunden). Hierbei entstehende Gase werden, ebenso wie die in der Methanisierungsstufe entstehenden Gase, dem Gasspeicher zugeführt.

Über einen Auslaufkonus sowie eine Schwerstoffschleuse werden abgesetzte, sandartige Materialien in einen Entwässerungscontainer geleitet, woraus die Schwerstoffe als Sediment abgezogen und einer Deponierung zugeführt werden.

Wie bereits erwähnt, wird die Methanisierung mesophil oder thermophil durchgeführt, weshalb je nach Temperatureinstellung auf ca. 35°C bzw. ca. 55°C die aus der Hygienisierung abgeführte Suspension abgekühlt werden muß. Die durch die Abkühlung entnommene Prozeßwärme wird vorzugsweise an anderer Stelle zur Aufwärmung der Suspension verwertet.

Weitere Erläuterungen zur Erfindung werden im folgenden anhand der Zeichnungen gegeben. Es zeigen
- Fig. 1: ein Blockfließbild des erfindungsgemäßen Verfahrens und
- Fig. 2: eine schematische Ansicht des Aufbaues einer Anlage zur Durchführung dieses Verfahrens.

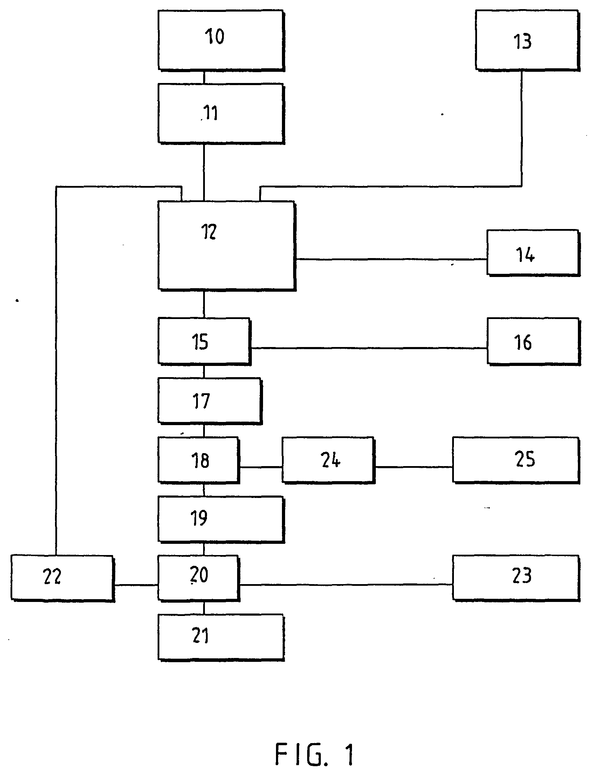

Wie aus Fig. 1 ersichtlich, bestehen die wesentlichen vorbereitenden Verfahrensschritte aus der Anlieferung 10, der Zwischenspeicherung und Materialaufgabe 11 und der Materialaufbereitung 12, bestehend aus einer Auflösung, einem Mischen sowie einem Absieben. Der angelieferte Bioabfall wird zusammen mit Brauch- bzw. Frischwasser 13 vermengt, nachdem Stör- oder Reststoffe 14 durch Aussortieren oder Absieben ausgeschieden wurden. Teil der Materialaufbereitung ist auch die Zerkleinerung, um die gewünschte Suspension aus Wasser und zerkleinerten Bioabfällen herzustellen, die einer Hydrolyse 15 zugeführt wird. Aus der Hydrolyse über den Auslaufkonus des Hydrolysebehälters ausgeschleuste Schwerstoffe 16 werden entwässert und entsorgt. Der etwa einen Tag dauernden Hydrolyse 15 folgt die Hygienisierung 17, die bei einer Temperatur von ca. 70°C über mindestens 30 Minuten stattfindet, wobei in einem entsprechend erwärmten Behälter die Suspension aus Wasser und Bioabfällen ständig bewegt wird, beispielsweise durch Rühren. Hierdurch ist eine gleichmäßige Temperaturverteilung im Hygienisierungsbehälter sichergestellt. Die Temperatur und die Verweilzeit der Suspension im Hygienisierungsbehälter werden kontinuierlich gemessen und ggf. auf die Zusammensetzung der Bioabfälle abgestimmt. Die betreffenden optimalen Temperatur- und Verweilzeitdaten sind in einer Steuerung gespeichert und jederzeit abrufbar.

Die hygienisierte Suspension wird anschließend der Methanisierung 18 in einem Fermenter nach Abkühlung auf ca. 35°C zugeführt. Die betreffende Temperatur ist optimal für eine mesophile Vergärung. Soll alternativ eine thermophile Vergärung durchgeführt werden, ist die Temperatur im Fermenter auf 55°C einzustellen. Das durch die Methanisierung entstehende Biogas 24 wird abgezogen und einer Verwertung 25, insbesondere einer Verbrennung in einem Blockheizkraftwerk zugeführt. Im Fermenter wird die Betriebstemperatur auf 35°C bzw. 55°C durch zwei Maßnahmen erreicht: Zum einen wird der Zulauf über einen Wärmetauscher, der energetisch aus dem Blockheizkraftwerk gespeist wird, erhitzt, zum anderen dienen Heizflächen des Reaktors selbst für eine Erwärmung bzw. Temperaturaufrechterhaltung. Auch die unmittelbare Reaktorheizung wird vorzugsweise mit der Blockheizkraftwerk-Abwärme vorgenommen. Der Reaktor zur Fermentation kann auf zweierlei Arten betrieben werden, die beide automatisch steuerbar sind. Zum einen über eine Druckkontrolle, bei der die Betriebszyklen durch die Geschwindigkeit der Gasproduktion und des damit verbundenen Druckanstieges bestimmt sind, zum anderen durch eine Kontrolle des Druckes und der Zeit, eine Betriebsweise, die zum Anfahren des Reaktors oder bei der Verarbeitung von Substraten mit geringerem Gasertrag vorzugsweise gewählt wird. Der Druckaufbau wird hierbei mit einem kleinen Gebläse unterstützt. Durch entsprechende Einbauten im Fermenter können Druckunterschiede zum Mischen des Materials (der Suspension) ausgenutzt werden, so daß zum Mischen von außen keinerlei Energie zugeführt werden muß.

Bei der biologischen Umsetzung der organischen Stoffe unter anaeroben Bedingungen werden als Stoffwechselprodukte der Mikroben hauptsächlich Methan und Kohlendioxid neben Spuren von anderen Gasen gebildet.

In demselben Maß, in dem eine frische Suspension aus der Hygienisierung in die Fermentation 18 überführt wird, wird die gleiche Menge an "ausgefaulter" Suspension in einen Vorlagebehälter (Zwischenspeicher 19) und anschließend in einen Dekanter 20 gepumpt, wo die Abtrennung von Gärreststoffen, die einer Kompostierung 21 zugeführt werden, vom Wasser stattfindet. Soweit das abgetrennte Wasser nicht als Brauchwasser 22 der Materialaufbereitung 12 rückgeführt wird, wird das abgetrennte Wasser einer Abwasserbehandlung 23 zugeleitet, und von dort aus ggf. rezyklierend verwendet.

Die abgetrennten Gärreststoffe sind geruchsarm.

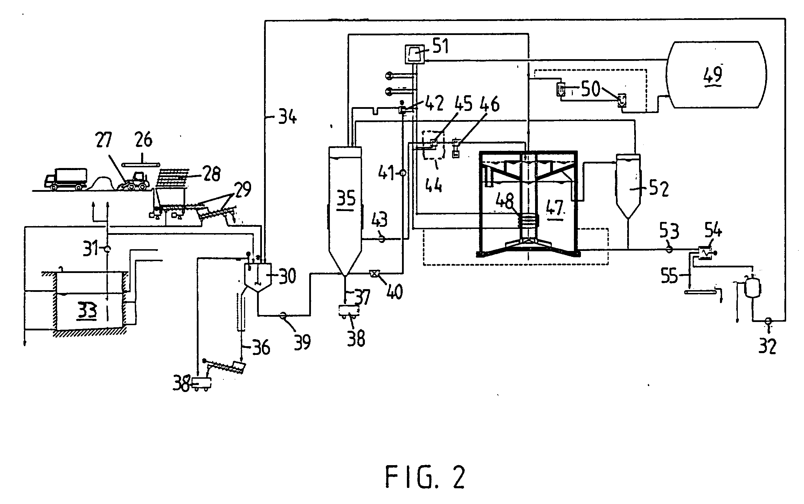

Eine geeignete Anlage zur Durchführung des vorbeschriebenen Verfahrens ist in Fig. 2 dargestellt. Das mittels Fahrzeugen angelieferte Material wird über Fördermittel (Bänder 26 oder Fahrzeuge 27) einer Siebung 28 und weiteren Schneckenförderern 29 zugeleitet, die den Bioabfall in einen Mischbehälter 30 fördern, der über entsprechende Pumpen 31 und/oder 32 mit Brauchwasser, das einem Tank 33 entnommen wird, oder gereinigtem Abwasser (siehe Pfad 34) gespeist. Etwaige Schwerstoffe werden hier oder aus dem Vorlagebehälter 35 jeweils über Leitungen 36 bzw. 37 abgezogen und einer Entsorgung 38 zugeführt.

Die mit Wasser versetzten Bioabfälle werden über die Pumpe 39 einem Mazerator 40 zugeführt, wo sie auf eine Größe unter 1 cm zerkleinert werden. Die Suspension aus Wasser und zerkleinerten Bioabfällen wird durch die Pumpe 41 in den Vorlagebehälter 35 gegeben. Die geschilderte Kreislaufführung wird so gesteuert, daß sie einer Hydrolyse und sauren Gärung (pH <7) dienen kann, weswegen die Suspension über den Wärmetauscher 42 auf die optimale Betriebstemperatur gebracht wird. Über die Pumpe 43 kann nach einer Verweilzeit von etwa einem Tag die hydrolysierte Suspension einer Hygienisierung zugeführt werden, die in einem eigens geschaffenen Behälter 44 stattfindet, in dem die Suspension auf Temperaturen von ca. 70°C (oder auch höheren Temperaturen, wie insbesondere 90°C) mittels eines Wärmetauschers 45 erwärmt wird. Nach mindestens 30 Minuten, vorzugsweise einer Stunde verläßt die Suspension den Hygienisierungsbehälter 44 und wird über einen Wärmetauscher 46 auf eine Temperatur von 35°C abgekühlt und dem Fermenter 47 eingegeben. Der Fermenter 47 wird mittels des Wärmetauschers 48 beheizt. Das in dem Fermenter 47 sowie in dem Behälter 35 gebildete Biogas wird einem Gasspeicher 49 nach Durchlaufen von Filtern 50 zugeleitet, von wo es aus je nach Bedarf in ein Blockheizkraftwerk 51 zur Verbrennung überführt werden kann. Die Abwärme wird in den genannten Wärmetauschern ausgenutzt.

Das aus dem Fermenter 47 abgezogene Material, ggf. nach Durchlauf eines Vorlagebehälters 52 wird mittels einer Pumpe 53 einem Dekanter 54 zugeführt. Das dekantierte Wasser kann als Brauchwasser 34 wieder verwendet werden. Der verbleibende Gärreststoff (siehe Pfeil 55) wird einer Kompostierung zugeleitet.

## Patentansprüche

1. Verfahren zur Behandlung von Bioabfällen, bestehend aus strukturarmen Bioabfällen, wie nativ organischen Bestandteilen des Hausmülls aus getrennten Sammlungen, Großküchenabfällen, Abfällen aus lebensmittelverarbeitenden Betrieben sowie vorgenannten Stoffen ähnlichen organischen Rückständen,
bei dem die aufgegebenen Bioabfälle zerkleinert, gemischt und mit Wasser in Form einer Suspension nach Absiebung von Störstoffen einer Hydrolyse und danach einer Fermentation (Methanisierung) unterzogen werden, woraus ein verbleibender Gärschlamm entwässert und einer Kompostierung zugeführt wird,
**dadurch gekennzeichnet,**
daß nach der Hydrolyse und vor der Fermentation eine Hygienisierung durchgeführt wird.

2. Verfahren nach Anspruch 1, dadurch gekennzeichnet, daß die Hygienisierung bei Temperaturen zwischen 70°C und 95°C über eine Dauer von mindestens 30 Minuten durchgeführt wird.

3. Verfahren nach Anspruch 1 oder 2, dadurch gekennzeichnet, daß die Suspension aus Wasser und zerkleinerten Bioabfällen während der Hygienisierung bewegt wird.

4. Verfahren nach einem der Ansprüche 1 bis 3, dadurch gekennzeichnet, daß die Hygienisierung in einem oder mehreren geschlossenen Behältern durchgeführt wird, die mittels Wärmetauschern geheizt werden, wobei die Heizenergie aus dem Biogas der Methanisierung gewonnen wird.

5. Verfahren nach einem der Ansprüche 1 bis 4, dadurch gekennzeichnet, daß die Bioabfälle vor der Hydrolyse auf eine Größe von maximal 1 cm Durchmesser zerkleinert werden, vorzugsweise mittels eines Mazerators.

6. Verfahren nach einem der Ansprüche 1 bis 5, dadurch gekennzeichnet, daß die Suspension aus Wasser und zerkleinerten Bioabfällen bis zu 24 h in einem Hydrolysebehälter verweilt, woraus vorzugsweise über einen Auslaufkonus sowie eine Schwerstoffschleuse abgesetzte, sandartige Materialien in einen Entwässerungscontainer sowie Gase abgezogen werden, die einem Gasspeicher zugeleitet werden.

7. Verfahren nach einem der Ansprüche 1 bis 6, dadurch gekennzeichnet, daß die Suspension nach der Hygienisierung auf eine Temperatur von ca. 35°C (für die mesophile Methangärung) oder ca. 55°C (für die thermophile Methangärung) abgekühlt wird.
